# EUROPÄISCHE PATENTANMELDUNG

(11) **EP 2 703 975 A2**
(43) Veröffentlichungstag der Anmeldung: **05.03.2014**
(21) Anmeldenummer: 13179868.8
(22) Anmeldetag: 09.08.2013
(51) Int. Cl.: G06F 3/0482

(54) **Verfahren und Vorrichtung zum Anzeigen und Bedienen von Informationen**

(30) Priorität: 29.08.2012 ES 201231339
(71) Anmelder: Seat, S.A., 08760 Martorell - Barcelona (ES)
(72) Erfinder: Olavarria, Abin Leyre, 08760 Barcelona (ES); Rodríguez, Bosch Rubén, 08760 Barcelona (ES); Baños, Serradilla Victor, 08760 Barcelona (ES)
(74) Vertreter: Isern-Jara, Nuria

(57) **Zusammenfassung**

Die Aufgabe der Erfindung besteht darin, ein Verfahren zur Anzeige und Bedienung von Informationen in einem Kraftfahrzeug zu schaffen, dass einfach in seiner Bedienung ist und dem Fahrzeugnutzer schnell und intuitiv eine Hinweis gibt, dass er die richtige Bedienung ausgeführt hat, damit er sich auf das Führen des Fahrzeugs konzentrieren kann. Weiterhin ist es Aufgabe der Erfindung eine entsprechende Vorrichtung zu schaffen.

Die Aufgabe wird mit einem Verfahren zur Anzeige und/oder Bedienung von Informationen in einem Kraftfahrzeug gelöst, bei dem mehrere aktivierbare Objekte mittels einer Anzeigeeinrichtung auf einem perspektivisch dargestellten Ring angeordnet dargestellt werden und mittels einer Eingabeeinrichtung ein grafisches Objekt aktiviert wird, und mittels einer Recheneinrichtung Grafikdaten derart erzeugt werden, dass das aktivierte grafische Objekt karussellartig in die perspektivisch vordere Position bewegt wird. Die Aufgabe wird weiterhin mit einer Vorrichtung zur Umsetzung des Verfahrens gelöst.

## Beschreibung

Die Erfindung betrifft ein Verfahren zum Anzeigen und/oder Bedienen von Informationen nach dem Oberbegriff des Anspruchs 1. Die Erfindung betrifft eine Vorrichtung zur Anzeige und/oder Bedienung von Informationen in einem Kraftfahrzeug mit einer Anzeigeeinrichtung zur grafischen Darstellung von Informationen, einer Recheneinrichtung mit welcher Grafikdaten auf der Anzeigeeinrichtung darstellbar sind und einer Eingabeeinrichtung die mit der Recheneinrichtung gekoppelt ist nach dem Oberbegriff des Anspruchs 9.

In einem Kraftfahrzeug werden Informationen auf einem Bildschirm als Anzeigeeinrichtung dargestellt und der Fahrzeugnutzer kann die dargestellten Informationen über eine Bedieneinrichtung aktivieren um eine Funktion auszuführen oder Einstellungen vorzunehmen oder um in eine Menüstruktur zu wechseln. Der Bildschirm befindet sich in oder auf der Instrumententafel des Kraftfahrzeuges oder in der Mittelkonsole. Die Anzeigeeinrichtung steht sowohl einem Fahrzeugnutzer als auch einem Beifahrer zur Verfügung und kann von dem einen oder dem anderen bedient werden. Mittels eines Bedienelementes kann ein Zeiger auf die entsprechende Information geführt werden und dann mittels eines Tasters die entsprechende Information ausgeführt, d.h. aktiviert werden. Insbesondere Touchscreens werden eingesetzt, bei denen mittels eines Fingers die entsprechende Information auf dem Bildschirm ausgesucht und durch Berühren aktiviert wird. Die Anzeige und Bedienung von Informationen in einem Fahrzeug wird häufig für ein Navigationssystem, für Telematik und/oder das Einstellen von Fahrerassistenzsystemen eingesetzt. Beim Einstellen und/oder Wechseln von Radiosendern wird ebenfalls ein Touchscreen verwendet.

Aus der EP 2181 013 A1 ist ein Verfahren zum Anzeigen von Informationen in einem Kraftfahrzeug bekannt, bei dem von einer Benutzerschnittstelleneinrichtung Grafikdaten erzeugt werden, die ein Display so ansteuern, dass Objekte auf einem virtuellen, perspektivisch angeordneten Ring angeordnet dargestellt werden, und dass auf eine Eingabe mittels einer Eingabeeinrichtung eine Recheneinheit der Benutzerschnittstelleneinrichtung die Grafikdaten so verändert, dass sich die Objekte auf dem virtuellen Ring karussellartig drehen. Der virtuelle Ring wird insbesondere perspektivisch dreidimensional in einer Ansicht von schräg oben dargestellt, so dass nicht nur die Objekte auf dem vorderen Abschnitt des virtuellen Ringes sichtbar sind sondern auch die Objekte auf der hinteren Seite des virtuellen Ringes.

Die Aufgabe der Erfindung besteht darin, ein Verfahren zur Anzeige und Bedienung von Informationen in einem Kraftfahrzeug zu schaffen, dass einfach in seiner Bedienung ist und dem Fahrzeugnutzer schnell und intuitiv eine Hinweis gibt, dass er die richtige Bedienung ausgeführt hat, damit er sich auf das Führen des Fahrzeugs konzentrieren kann. Weiterhin ist es Aufgabe der Erfindung eine entsprechende Vorrichtung zu schaffen.

Erfindungsgemäß wird diese Aufgabe durch ein Verfahren mit den Merkmalen des Anspruchs 1 und einer Vorrichtung mit den Merkmalen des Anspruchs 9 gelöst. Weitere vorteilhafte Ausführungen der Erfindung finden sich in den Unteransprüchen.

Erfindungsgemäß werden bei dem Verfahren zum Anzeigen und/oder Bedienen von Informationen in einem Kraftfahrzeug mehrere aktivierbare Objekte mittels einer Anzeigeeinrichtung auf einem perspektivisch angeordneten Ring dargestellt werden, wobei mittels einer Eingabeeinrichtung ein grafisches Objekt aktiviert wird und wobei mittels einer Recheneinrichtung Grafikdaten derart erzeugt werden, dass das aktivierte grafische Objekt karussellartig bis zur perspektivisch vorderen Position bewegt wird.

Eine vorteilhafte Ausgestaltung der Erfindung besteht darin, dass das aktivierte Objekt grafisch hervorgehoben dargestellt wird, bevor es karussellartig bis zur perspektivisch vorderen Position bewegt wird. Besonders vorteilhaft ist die Hervorhebung einer dem aktivierbaren Objekt zugeordneten Farbe.

Es ist ebenfalls vorteilhaft, dass mittels der Recheneinrichtung grafisch in eine Ansicht gewechselt wird, die die dem aktivierten Objekt zugeordnet ist, nachdem das aktivierte Objekt bis zur perspektivisch vorderen Position karussellartig bewegt wurde. Es ist ebenfalls vorteilhaft, dass der perspektivisch dargestellte Ring grafisch verkleinert wird, bevor auf der Anzeigeneinrichtung in die dem aktivierten Objekt zugeordnete Ansicht gewechselt wird. Weiterhin ist es vorteilhaft, dass der perspektivisch dargestellte Ring ausgeblendet wird, bevor der Wechsel in die dem aktivierten Objekt zugeordnete Ansicht erfolgt. Ein besonderer Vorteil der Erfindung besteht darin, dass der perspektivisch dargestellte Ring von mindestens zwei grafisch erzeugten Kreissegmenten umgeben dargestellt wird. Dies ermöglicht es, eine dreidimensionale Darstellung noch besser räumlich erscheinen zu lassen.

Es ist besonders erfinderisch, dass wenn die Recheneinrichtung von der dem aktivierten Objekt zugeordneten Ansicht grafisch auf den perspektivisch dargestellten Ring wechselt, das aktivierte Objekt in der vorderen Position dargestellt wird.

Erfindungsgemäß ist eine Vorrichtung zur Anzeige und/oder Bedienung von Informationen in einem Kraftfahrzeug mit einer Anzeigeeinrichtung zur grafischen Darstellung von Informationen, einer Recheneinrichtung, mit welcher Grafikdaten auf der Anzeigeeinrichtung darstellbar sind und einer Eingabeeinrichtung die mit der Recheneinrichtung gekoppelt ist vorteilhaft, wobei die Recheneinrichtung derart ausgebildet ist, dass mehrere aktivierbare Objekte mittels der Anzeigeeinrichtung auf einem perspektivisch dargestellten Ring angeordnet grafisch dargestellt werden und mittels der Eingabeeinrichtung ein grafisches Objekt aktiviert wird und mittels der Recheneinrichtung Grafikdaten derart erzeugt werden, dass das aktivierte grafische Objekt karussellartig bis zur perspektivisch vorderen Position bewegt wird.

Bevorzugte Ausführungsformen der Erfindung werden nachfolgend anhand der Zeichnungen erläutert.
Figur 1: Schematische Darstellung der erfinderischen Vorrichtung
Figur 2: Schematische Darstellung eines aktivierten grafischen Objektes auf einem perspektivisch dargestellten Ring
Figur 3: Schematische Darstellung eines aktivierten grafischen Objektes, nachdem es karussellartig bis zur perspektivisch vorderen Position bewegt wurde
Figur 4: Schematische Darstellung eines perspektivisch dargestellten Ringes der grafisch verkleinert und in einem Zustand während des Ausblendens dargestellt ist.
Figur 5: Schematische Darstellung des vollkommen ausgeblendeten perspektivisch dargestellten Ringes

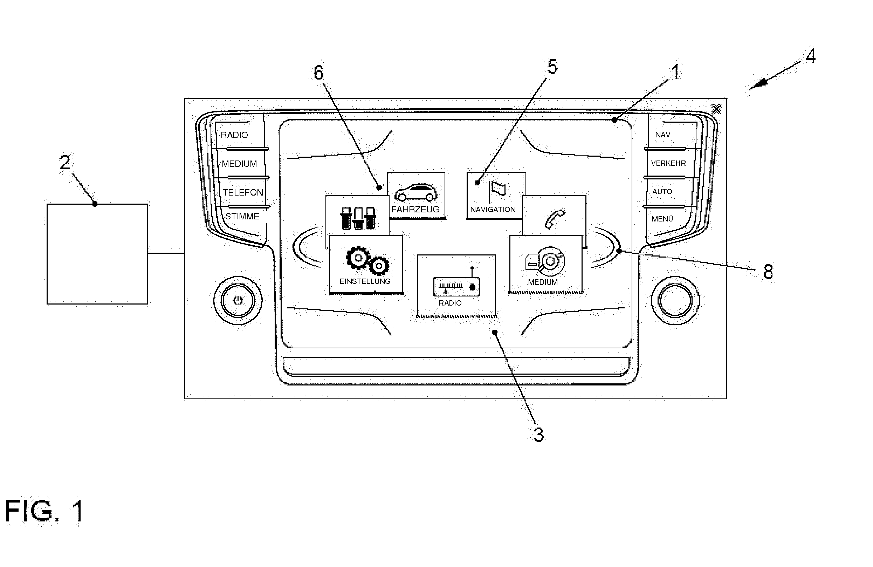

In einem vorteilhaften Ausführungsbeispiel zeigt Figur 1 die Vorrichtung 4 zur Anzeige und/oder Bedienung von Informationen, die beispielsweise über eine Datenleitung mit einer Recheneinrichtung 2 gekoppelt ist. Mittels der Recheneinrichtung 2 werden grafische Objekte 5 auf der Anzeige dargestellt und diese auch grafisch bewegt, wobei die Bewegen ein erneuter Grafikaufbau ist, der so schnell hintereinander erfolgt, dass er für das menschliche Auge als eine kontinuierliche Bewegung wahrgenommen wird. Der perspektivisch dargestellte Ring wird insbesondere perspektivisch dreidimensional in einer Ansicht von schräg oben dargestellt. Damit ist gewährleistet, dass jedes aktivierbare Objekt 5 für den Fahrzeugnutzer sichtbar und aktivierbar ist. Dies ermöglicht ihn beispielsweise mit einem Touchscreen als Eingabeeinrichtung 3 die Aktivierung jedes dargestellten aktivierbaren Objektes 5 mittels eines Fingers auf der Anzeigeeinrichtung 1 durchzuführen. Die Vorrichtung 4 ist beispielsweise in der Mittelkonsole des Fahrzeugs angeordnet und in der Umgebung der Anzeigeeinrichtung 1 ist mindestens ein Taster 9 angeordnet. Sowohl die Aktivierung eines Objektes 5 auf dem Touchscreen 3 als auch die Aktivierung eines Tasters 9 erzeugt ein Signal, welches zu Recheneinrichtung 2 geleitet wird, um dort den entsprechenden Befehl zuzuordnen und beispielsweise eine grafische Darstellung von Informationen auf der Anzeigeeinrichtung 1 zu erzeugen. Die ringförmigen Kreissegmente 8 am linken und rechten Rand des perspektivisch dargestellten Ringes 6 ermöglichen den Effekt, dass der perspektivisch dargestellte Ring 6 räumlich erscheint, was für den Fahrzeugnutzer bei der Bedienung ein Vorteil ist, da er die Anordnung der aktivierbaren Objekte besser wahrnimmt. Weiterhin befindet sich ein verständliches Symbol (beispielsweise eine Fahne für Navigation) und/oder ein Schriftzug (beispielsweise "Navigation") innerhalb der Kontur des aktivierbaren grafischen Objektes 5, dem auch eine Farbe, hier beispielsweise als Linie dargestellt, zugeordnet ist. In der Menüführung wird diese Farbe beibehalten, so dass der Fahrzeugnutzer, nachdem er das Objekt 5 für die Navigation aktiviert hat, auch in der der Navigation zugeordneten Ansicht 7 weiterhin die genannte Farbe angezeigt bekommt. In Figur 9 ist die dem aktivierbaren Objekt " Navigation" zugeordnete Ansicht dargestellt, wobei die Linien um die Ecktasten auf der Anzeigeeinrichtung 1 wie "Meine Ziele, "Neues", usw. wieder die genannte Farbe als Linie beinhalten. In der Darstellung in Figur 1 und Figur 9 ist anstelle der Farben eine schraffierte Darstellung aufgeführt.

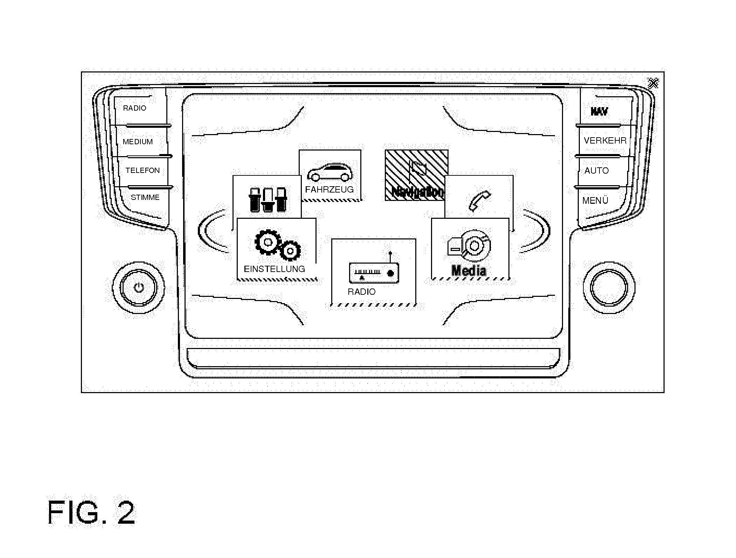

Der Fahrzeugnutzer aktiviert auf dem Touchscreen 1 beispielsweise das Objekt Navigation und wie in Figur 2 dargestellt, erscheint kurzzeitig, beispielswese eine halbe Sekunde lang, das aktivierte Objekt 5 in der ihm zugeordneten Farbe, hier schraffiert dargestellt, wobei der Fahrzeugnutzer weiterhin das Symbol und /oder den Schriftzug erkennt. Dies geschieht durch eine Darstellung der Farbe in einem Transparenzgrad, der entsprechend ausgewählt ist. Dies hat den Vorteil, dass der Fahrzeugnutzer bestätigt bekommt, dass er auch das Objekt "Navigation" aktiviert hat und ermöglicht, dass er sich wieder auf die Führung des Fahrzeugs konzentrieren kann. Es ist im Sinne der Erfindung, dass sich der perspektivische Ring 6 karussellartig dreht, was mittels der Recheneinrichtung 2 geschieht, indem die grafischen Objekte 5 derart dargestellt werden, dass dem Fahrzeugnutzer ein kontinuierlich bewegter Ring 6 erscheint. Dies ist aus dem Film bekannt, indem beispielsweise 16 bis 18 Bilder, oder wie hier grafische Objekte 5, pro Sekunde genügen, damit sie als eine kontinuierliche Bewegung wahrgenommen werden.

Der perspektivische Ring 6 dreht sich nach der Aktivierung des Objektes 5 so lange, bis das aktivierte Objekt 5 in der perspektivisch vorderen Position für den Fahrzeugnutzer dargestellt wird. Durch diesen erfinderischen Vorteil bekommt der Fahrzeugnutzer die Bestätigung, dass das aktivierte Objekt 5 auch aktiviert wurde und er kann sich vergewissern, dass auch das richtige Objekt ausgewählt wurde, indem das aktivierte Objekt 5 mit dem Schriftzug und /oder dem Symbol in der vorderen Position kurzzeitig , beispielsweise eine halbe Sekunde, verweilt, bevor von der Recheneinrichtung die zugehörige Ansicht 7 aufgebaut wird.

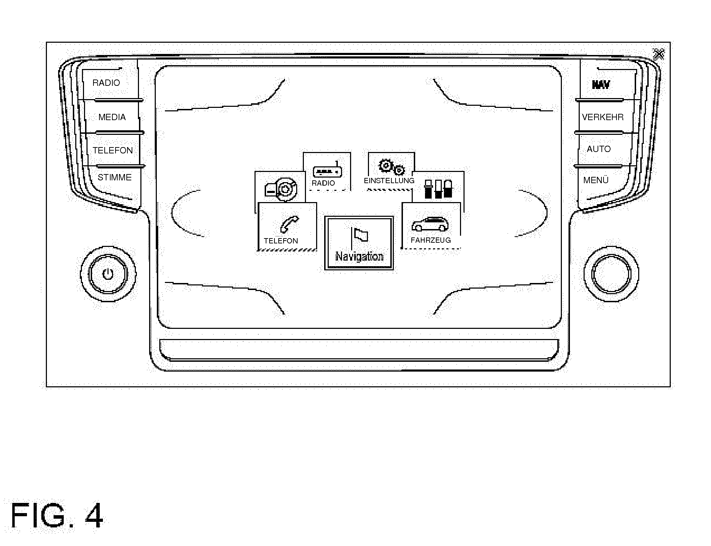

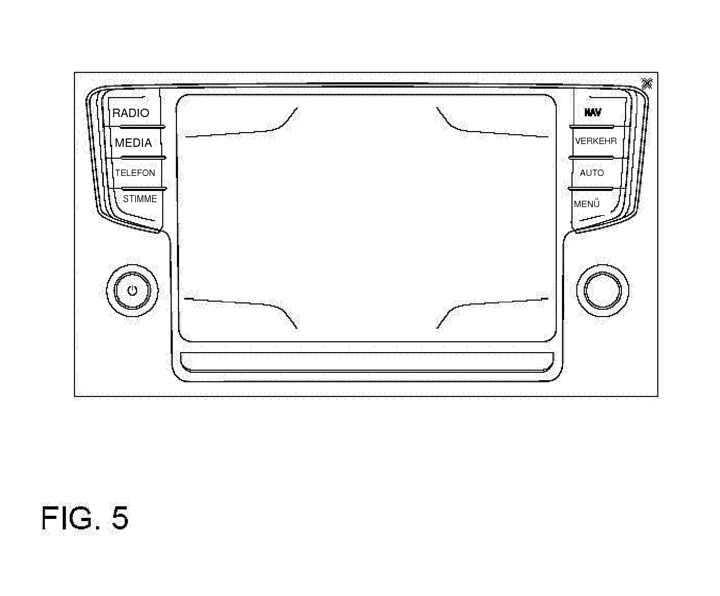

In Figur 4 wird erfinderisch gezeigt, dass der perspektivisch dargestellte Ring 6 grafisch ausgeblendet wird. Dies wird vorteilhaft erreicht, indem die Farben in Ihrer Intensität kontinuierlich mittels der Recheneinrichtung 2 verändert werden, bis sie vollkommen ausgeblendet und für den Fahrzeugnutzer nicht mehr sichtbar sind, wie in Figur 5 dargestellt. Gleichzeitig wird der perspektivische Ring 6 verkleinert dargestellt, was den Vorteil hat, dass es räumlich weiter weg erscheint. Mit anderen Worten wird durch die Verkleinerung der Effekt erzielt, dass sich der perspektivische Ring virtuell vom Fahrzeugnutzer weg entfernt.

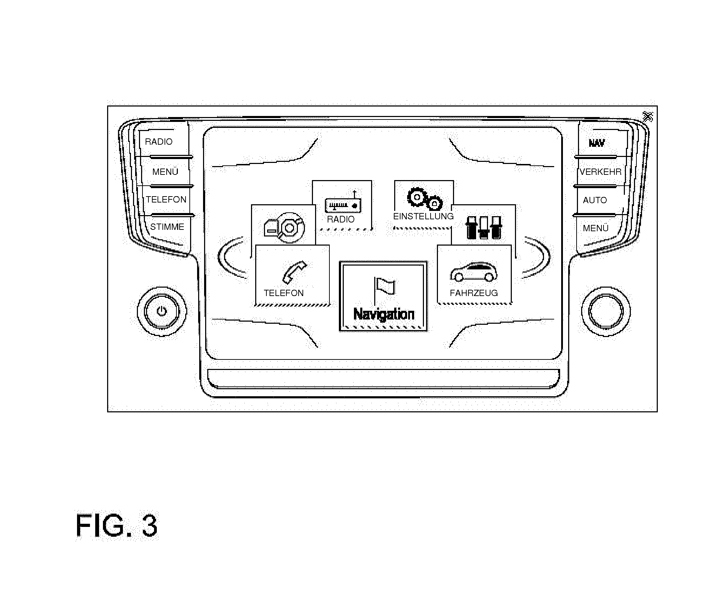

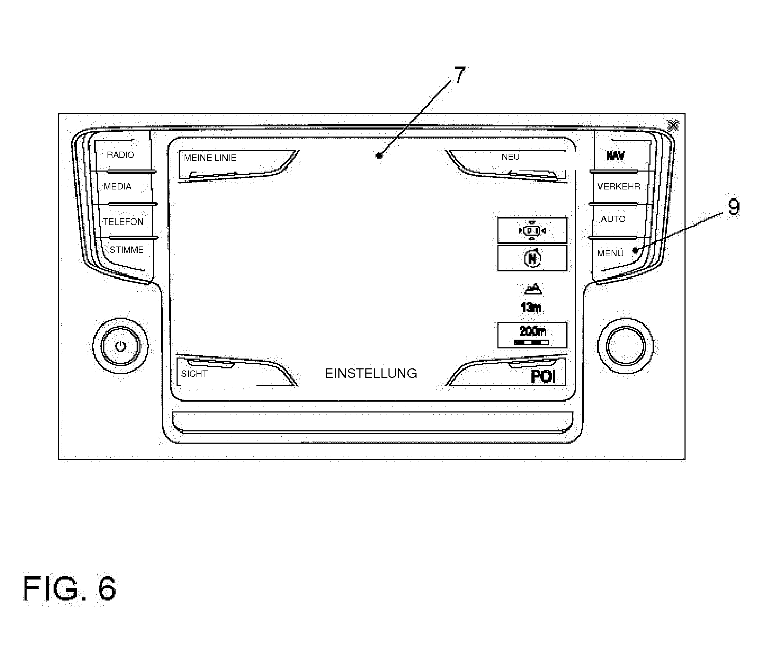

Nachdem der perspektivische Ring 6 vollkommen ausgeblendet ist (Figur 5) wird mittels der Recheneinrichtung 2 eine Ansicht 7 als Grafik mit weiteren aktivierbaren Objekten erzeugt, wie sie in Figur 6 beispielhaft für die Benutzung eines Navigationssystems in einem Fahrzeug dargestellt ist. Diese Ansicht 7 ist dem vom Fahrzeugnutzer aktivierten Objekt 5 zugeordnet. Möchte der Fahrzeugnutzer wieder zur Darstellung des perspektivisch dargestellten Ringes 6 wechseln, kann er beispielsweise auf die Taste Menü 9 drücken und er wechselt in die Darstellung der Figur 3. Hierbei ist es besonders erfinderisch, dass kein voreingestellter perspektivisch dargestellter Ring 6 auf der Anzeigeeinrichtung 1 erscheint, sondern das zuletzt aktivierte Objekt 5 in der vorderen Darstellung.

### Bezugszeichenliste

- 1: Anzeigeeinrichtung
- 2: Recheneinrichtung
- 3: Eingabeeinrichtung
- 4: Vorrichtung zum Anzeigen und Bedienen von Informationen
- 5: grafisches Objekt, welches aktivierbar ist
- 6: perspektivisch dargestellter Ring der aktivierbaren, grafischen Objekte
- 7: dem aktivierbaren Objekt zugeordnete Ansicht
- 8: Kreissegment
- 9: Taster

## Patentansprüche

1. Verfahren zum Anzeigen und/oder Bedienen von Informationen in einem Kraftfahrzeug, bei dem
- mehrere aktivierbare Objekte (5) mittels einer Anzeigeeinrichtung (1) auf einem perspektivisch dargestellten Ring (6) angeordnet dargestellt werden
- mittels einer Eingabeeinrichtung (3) ein grafisches Objekt (5) aktiviert wird, und
- mittels einer Recheneinrichtung (2) Grafikdaten derart erzeugt werden, dass das aktivierte grafische Objekt karussellartig bis zur perspektivisch vorderen Position bewegt wird.

2. Verfahren nach Anspruch 1 **dadurch gekennzeichnet, dass** das aktivierte Objekt (5) grafisch hervorgehoben dargestellt wird, bevor es karussellartig bis zur perspektivisch vordere Position bewegt wird.

3. Verfahren nach Anspruch 2 **dadurch gekennzeichnet, dass** eine dem aktivierbaren Objekt (5) zugeordnete Farbe hervorgehoben dargestellt wird.

4. Verfahren nach Anspruch 1 **dadurch gekennzeichnet, dass** mittels der Recheneinrichtung (2) grafisch in eine dem aktivierten Objekt (5) zugeordnete Ansicht (7) auf der Anzeigeeinrichtung (1) gewechselt wird, nachdem das aktivierte grafische Objekt (5) die perspektivisch vordere Position erreicht hat.

5. Verfahren nach Anspruch 4 **dadurch gekennzeichnet, dass** der perspektivisch dargestellte Ring (6) grafisch verkleinert wird, bevor auf der Anzeigeeinrichtung (1) in die dem aktivierten Objekt (5) zugeordnete Ansicht (7) gewechselt wird.

6. Verfahren nach Anspruch 4 oder 5 **dadurch gekennzeichnet, dass** der perspektivisch dargestellte Ring (6) ausgeblendet wird, bevor auf der Anzeigeeinrichtung (1) in die dem aktivierten Objekt (5) zugeordnete Ansicht (7) gewechselt wird.

7. Verfahren nach Anspruch 1 **dadurch gekennzeichnet, dass** der perspektivisch dargestellte Ring von mindestens zwei Kreissegmenten (8) umgeben dargestellt wird.

8. Verfahren nach Anspruch 1 **dadurch gekennzeichnet, dass** das aktivierte Objekt (5) auf dem perspektivisch dargestellten Ring (6) in der vorderen Position dargestellt wird, wenn die Recheneinrichtung (2) von der zugeordneten Ansicht (7) zu dem perspektivisch dargestellte Ring (6) wechselt.

9. Vorrichtung zur Anzeige und/oder Bedienung von Informationen in einem Kraftfahrzeug (4) mit einer Anzeigeeinrichtung (1) zur grafischen Darstellung von Informationen, einer Recheneinrichtung (2), mit welcher Grafikdaten auf der Anzeigeeinrichtung (1) darstellbar sind und einer Eingabeeinrichtung (3) die mit der Recheneinrichtung (2) gekoppelt ist, **dadurch gekennzeichnet, dass** die Recheneinrichtung (2) derart ausgebildet ist, dass
- mehrere aktivierbare Objekte (5) mittels der Anzeigeeinrichtung (1) auf einem perspektivisch dargestellten Ring (6) angeordnet dargestellt werden,
- mittels der Eingabeeinrichtung (3) ein grafisches Objekt (5) aktiviert wird, und
- mittels der Recheneinrichtung (2) Grafikdaten derart erzeugt werden, dass das aktivierte grafische Objekt karussellartig in die perspektivisch vordere Position bewegt wird.

10. Vorrichtung nach Anspruch 9 **dadurch gekennzeichnet, dass** die Recheneinrichtung (2) derart ausgebildet ist, dass das aktivierte Objekt (5) grafisch hervorgehoben dargestellt wird, bevor es karussellartig in die perspektivisch vorderen Position bewegt wird.

11. Vorrichtung nach Anspruch 10 **dadurch gekennzeichnet, dass** die Recheneinrichtung derart ausgebildet ist, dass eine dem aktivierbaren Objekt (5) zugeordnete Farbe hervorgehoben dargestellt wird.

12. Vorrichtung nach Anspruch 9 **dadurch gekennzeichnet, dass** die Recheneinrichtung (2) derart ausgebildet ist, dass grafisch in eine dem aktivierten Objekt (5) zugeordnete Ansicht (7) auf der Anzeigeeinrichtung (1) gewechselt wird, nachdem das aktivierte grafische Objekt (5) die perspektivisch vordere Position erreicht hat.

13. Vorrichtung nach Anspruch 9 **dadurch gekennzeichnet, dass** die Recheneinrichtung derart ausgebildet ist, dass der perspektivisch dargestellte Ring (6) grafisch verkleinert wird, bevor auf der Anzeigeeinrichtung (1) in die dem aktivierten Objekt (5) zugeordnete Ansicht (7) gewechselt wird.

14. Vorrichtung nach Anspruch 12 oder 13 **dadurch gekennzeichnet, dass** die Recheneinrichtung (2) derart ausgebildet ist, dass der perspektivisch dargestellte Ring (6) ausgeblendet wird, bevor auf der Anzeigeeinrichtung (1) in die dem aktivierten Objekt (5) zugeordnete Ansicht (7) gewechselt wird.

15. Vorrichtung nach Anspruch 9 **dadurch gekennzeichnet, dass** die Recheneinrichtung (2) derart ausgebildet ist, dass der perspektivisch dargestellte Ring von mindestens zwei Kreissegmenten (8) umgeben dargestellt wird.

16. Vorrichtung nach Anspruch 9 **dadurch gekennzeichnet, dass** die Recheneinrichtung (2) derart ausgebildet ist, dass das aktivierte Objekt (5) auf dem perspektivisch dargestellte Ring (6) in der vorderen Position dargestellt wird, wenn die Recheneinrichtung (2) von der zugeordneten Ansicht (7) zu dem perspektivisch dargestellte Ring (6) wechselt.
